# EUROPEAN PATENT APPLICATION

(11) **EP 2 114 046 A2**
(43) Date of publication of application: **04.11.2009**
(21) Application number: 09158992.9
(22) Date of filing: 28.04.2009
(51) Int. Cl.: H04L 29/06, G06F 21/00, H04L 29/08

(54) **Download of Digital Content within a Secure In-Store Digital Content Distribution System**

(30) Priority: 28.04.2008 US 111104
(71) Applicant: Digital Electronics Solutions Development Corporation, 31952 Al Khobar (SA)
(72) Inventor: Srage, Jay M, Texas, 75093 (US)
(74) Representative: Ahmad, Sheikh Shakeel

(57) **Abstract**

A method and system for downloading of digital content within a secure in-store digital content distribution system is provided. The system is built within a digital content distribution system environment that allows the transfer and secure storage of content. The digital content distribution system contains a digital rights management DRM server, high capacity storage and an HTTP server to establish communication with the main media server where all available content can be stored. The system connects to available media server and downloads content. In addition, the system may apply usage and security rules to every piece of downloaded content that are downloaded to a portable memory or portable device with all DRM rules and keys issued to the device.

## Description

### BACKGROUND OF THE INVENTION

### Field of the Invention

This invention relates generally to a digital content distribution system and, more particularly, to a secure in-store digital content distribution system to facilitate download of digital content.

### Description of the Related Art

The digital conversion of content has started back in the late 1990s. Most of the digital content has been limited in size due to the limitation of the content itself. For example, a typical music track ranges in size from two to three megabytes, which typically takes seconds to download over the internet. However, larger size content such DVD movies, and now with the advent of HD movies and BLU-Ray movies, the size of each file will far exceed 1.5 Gigabytes; which will make the download of the file a very lengthy process over the typical household internet taking hours, and rendering the user experience useless.

Today, there are many existing forms and systems to deliver digital content to the consumer. Whether it's a consumer computing device, a mobile phone or an in-store kiosk, content access happens through a PC with an internet connection, directly connected to media server where the content is stored. Two examples will be provided: (1) online music and movie stores (2) kiosks.

Online music stores are typically websites that are hosted on the provider's main media server; which allows secure DRM-based delivery of encrypted digital content (music, or movies) to a portable internet-connected device (laptop, cell phone, or media player). When the portable device requests access for a specific music track or movie, the main media server uploads the requested content with the DRM wrapper to the portable device. The portable device could have a DRM child-key issued to it which allows the playing of content, or the portable device would need to be connected to the internet to validate with the main media server that the content has been purchased by the user.

After the validation of the DRM key, a license is issued to allow the content to play on the portable device. The content is downloaded from the website to the internet-connected portable device at typical internet speeds, which has associated disadvantages, as set out below.

Another example in the market place is a kiosk, or a retail content downloading system (referring to patent filed US20060190410) which consists of a PC computing device with user interface that allows content selection, a payment point of sales, and a memory input-device. A portable device such a memory stick, a hard disk drive, a media player or a mobile phone plugs into the memory input-device. The user can select via the touch screen the type of content that he or she wishes to download, makes the payment via the point of sales, and the retail system makes the request to the main media server to download that specific piece of content. The main media server uploads the requested content with the DRM wrapper to the portable device. The portable device could have a DRM child-key issued to it which allows the playing of content, or the portable device would need to be connected to the internet to validate with the main media server that the content has been purchased by the user. After the validation of the DRM key, a license is issued to allow the content to play on the portable device. A portable device with no internet connectivity capabilities may then be plugged into a third device with internet connectivity. The content may be copied into the library of the third device if the DRM rules allow it, and the third device validates the DRM license acquired at the store. The content is downloaded from the website to the internet-connected portable device at typical internet speeds, which again has associated disadvantages, as set out below.

Typical download time for a 2GB (Gigabyte) movie with DVD quality on a typical average 1 mbps internet connection would be around 4.5 hours; this renders the user experience dramatically frustrating versus renting a DVD from a brick and mortar store. It also renders the sales experience impractical as the consumer making the purchase or the rental via kiosk will find it impractical to wait for 4.5 hours to receive their download. Increasing the internet connection to improve download time to an acceptable level would be too costly, inefficient, and not readily available at every location where the kiosks are to be installed.

Furthermore, the above processes relying on internet connectivity are compromised when internet connection is not available, or when there is a lot of traffic on the network, reducing the connection speeds.

Accordingly, there is a need for a system that provides, among other things, faster downloads of digital content while applying all security and DRM rules enforced by the content providers.

### BRIEF SUMMARY OF THE INVENTION

According to the first aspect of the present invention there is provided a digital content distribution system comprising: a main media server comprising a main content storage server, a main DRM server and a main HTTP server; and a local distribution system comprising a local content storage server, a local DRM server and a local HTTP server, wherein the main HTTP server communicates with the local HTTP server and the digital content distribution system is arranged to configure the local distribution system as a mirror of the main media server.

In one embodiment, the main media server is arranged to configure the local distribution system as a mirror of the main media server.

Preferably, the main content storage server contains all digital content that is accessible through the internet connection.

Optionally, the DRM server contains all DRM protection and security rules that are associated with all of the DRM-protected digital content stored on the main content storage server.

In a preferred embodiment, the local content storage server and the local DRM server mirror the main content storage server and the main DRM server for all digital content that has been uploaded onto the local distribution system.

Preferably, the main HTTP server and the local HTTP server are adapted to download digital content from the main media server to the local distribution system.

In a preferred embodiment, the main HTTP server and the local HTTP server are further adapted to communicate with each other such that the main media server may be used to perform maintenance, support and remote testing of the local distribution system.

The system may optionally further comprise an external device coupled to the local distribution system, the external device adapted to receive one of a portable memory device or a portable device to transfer digital content to.

In one embodiment, the external device is a PC having an interface that includes a PC-based synchronization software, and payment for content purchases.

Optionally, the external device is a kiosk having a point of sales adapted for use of a credit card for content purchases and a touch screen with a user interface adapted to allow a user to select, download and purchase displayed content.

According to another aspect of the present invention, there is provided a method that allows download and purchase of content the method comprising: connecting a portable device to a memory input-device or a memory port; requesting a download of content of the portable device or the user, through a user interface; and determining by a local content storage server whether the content is an unprotected open file or DRM-protected.

Preferably, the method may further comprise uploading digital content directly to the portable device in response to a determination that the content is unprotected.

Optionally, the method may further comprise issuing a key and license wrapper by a local DRM server and combining it with the digital content in response to a determination that the content is DRM-protected, and uploading the DRM wrapped content to the portable device.

Typically, the method may further comprise unplugging the portable device.

Optionally, the method may further comprise playing the digital content immediately in response to the portable device being adapted to be Microsoft PlayforSure compliant.

Preferably, the method may further comprise playing the digital content in response to the portable device validating the license issued by the local DRM server through an internet connection.

Preferably, the method may further comprise copying the digital content to a third device in response to the portable device not being Microsoft PlayforSure compliant.

In a preferred embodiment, the method may further comprise continuously updating new content from the main media server to the mirror local digital content distribution system from the main HTTP server to the local HTTP server.

According to another aspect of the present invention, there is provided a method for remote testing of the local digital content distribution system, the method comprising: sending a data signal from the main media server to the local digital content distribution system; and implementing a simulated download process in response to the data signal, wherein the data signal is adapted to store a sample piece of content on the local content storage server, store associated DRM license and key on the DRM server, push the sample content back out from the local content storage server, and wraps it with the DRM key and license.

Preferably, the data signal sends the content back via the local HTTP server to the main HTTP server.

Optionally, the method may further comprise acknowledging the receipt of the sample DRM-protected content by the main media server and validating it against the original sample content sent.

The present invention relates to a method and system for downloading of digital content within a secure in-store digital content distribution system. The system is built within a digital content distribution system environment that allows the transfer and secure storage of content. The digital content distribution system contains a digital rights management DRM server, high capacity storage and an HTTP server to establish communication with the main media server where all available content can be stored. The system connects to the available media server and downloads content. In addition, the system may apply usage and security rules to every piece of downloaded content that are downloaded to a portable memory or portable device with all DRM rules and keys issued to the device.

In a further aspect of the present invention there is provided a system implementation that mirrors the main media server configuration that distributes content to online music and movie stores in a local environment. the system comprises a main media server having a main content storage server, a main DRM server and a main HTTP server; and a local distribution system that mirrors the main media server having a local content storage server, a local DRM server and a local HTTP server, wherein the local HTTP server is connected through an Internet connection to the main HTTP server in order for the main media server to communicate with the local distribution system.

The preferred features relating to the first aspect of the present invention also relate to this further aspect of the invention.

The system is built within a digital content distribution system environment that allows the transfer and secure storage of content within that environment. The digital content distribution system contains a (Digital Rights Management) DRM Server, high-capacity Storage and an HTTP Server to establish the communication with the main media server where all available content is stored. The Servers and Storage can be built-in within a kiosk environment, or within a server room that is connected to a PC and touch screen hosting the user interface through which the consumer performs a full purchase cycle of digital content.

The digital content distribution system would establish a communication line at the typical available internet speed with the main media server. Content gets transferred continuously and stored securely within the digital content distribution system, and is updated periodically (e.g. daily) with the completed transferred content on a daily basis at a specific time. The digital content distribution system would duplicate and apply the same DRM usage and security rules to every piece of downloaded content. With the content available within the digital content distribution system secure environment, it can be securely download to any type of portable memory or device with all DRM rules and keys issued to the device at a speed restricted only by the interface speed between the PC and the portable memory device, memory card or portable device; which brings down the download time for large Gigabyte files from hours to just minutes or even less depending on the file size. The digital content distribution system will have a touch screen user interface that allows the consumers to select the type of content to purchase, download it via the memory type input module built-in to the digital content distribution system, and into the memory card or portable device. The portable device would validate the DRM key, and the consumer can view or listen to the content.

These and other features, aspects, and advantages of the present invention will become better understood with reference to the following drawings and description.

### BRIEF DESCRIPTION OF THE DRAWINGS

FIG. 1 is a schematic view of a local digital content distribution system;
FIG. 2 is a schematic view of a main media server;
FIG. 3 is a schematic view of a full system configuration;
FIG. 4 is a flow chart of a method that allows download and purchase of content; and
FIG. 5 is a flow chart of a method that allows remote testing of the local digital content distribution system.

### DETAILED DESCRIPTION OF THE INVENTION

The invention describes a method and system for downloading of digital content within a secure in-store digital content distribution system. The system is built within a digital content distribution system environment that allows the transfer and secure storage of content. The digital content distribution system contains a digital rights management DRM server, high capacity storage and an HTTP server to establish communication with the main media server where all available content can be stored. The system connects to available media server and downloads content. In addition, the system may apply usage and security rules to every piece of downloaded content that are downloaded to a portable memory or portable device with all DRM rules and keys issued to the device.

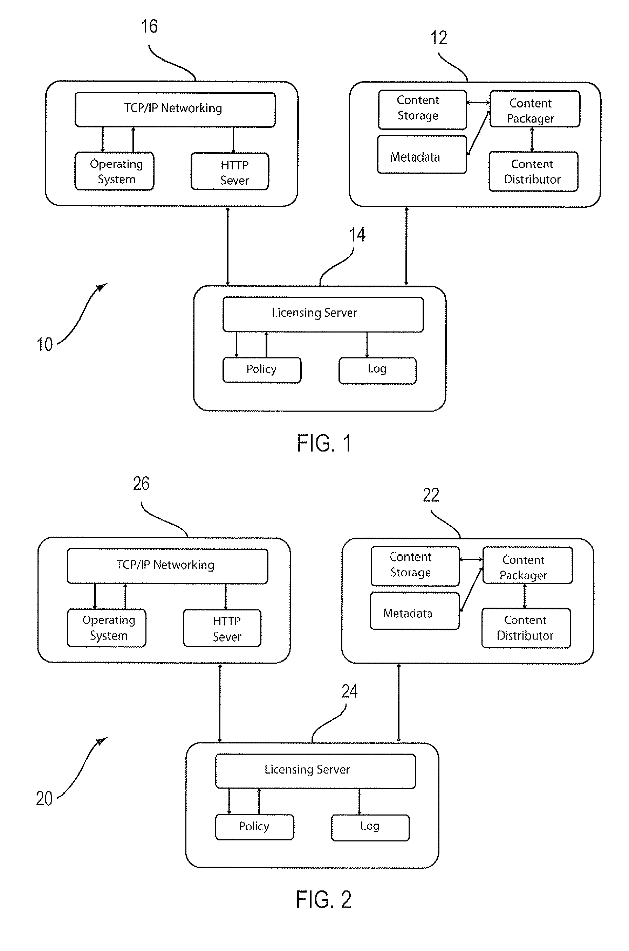

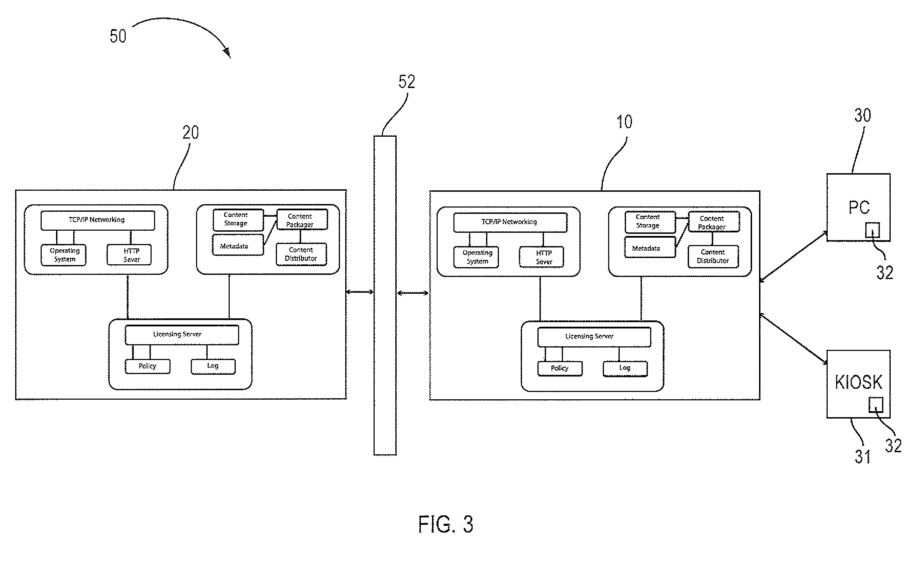

FIG. 1 illustrates one embodiment of a local digital content distribution system 10, described below allows the secure storage of content and transfer to a portable device at speed only limited to the interface between the PC and the portable device, and not limited by internet connectivity. The digital content distribution system 10 may include a local (Digital Rights Management) DRM server 14, a local content storage server 12 a local HTTP Server 16 and a local PC 30 or kiosk 31 (as shown in FIG. 3) to establish the communication with the main media server 20 shown in FIG 2, where all available content is stored.

Referring to FIG. 3, the connection between main media server 20 and the local digital content distribution system 10 can be at typical low-cost DSL internet speeds. The content storage server 12 contains a set amount of digital content filling the capacity. The DRM server 14 contains the DRM wrappers for each of the available content on the content storage server 12. The content gets updated continuously through the HTTP server 16 from the main media server 20 via the DSL internet connection.

The main media server 20 contains the main DRM server 24, the main HTTP server 26, to maintain and manage internet connectivity, and a main content storage server 22, that contains all currently available stored content. In the full configuration 50, the local distribution system 10 is a mirror or duplication of the main media server 20, wherein the local distribution system 10 has similar servers and processes for maintaining the security of the digital content.

The new content transmitted via the main HTTP server 26 (possibly through a firewall 52) from the main content storage server 20 is delivered with the associated DRM wrapper via the main DRM server 24. The new content is received through the local HTTP server 16 and then stored in the local content storage server 12, and the associated DRM wrapper in the local DRM server 14.

New content is updated every 24 hours at a specific time of the day, while additional content continues to flow in real-time from the main media server 20 to the local digital content distribution system 10.

A user may plug a portable memory device (a media player, mobile phone, hard disk drive, USB stick, memory card - SD/mini-SD/Micro-SD, Memory Stick, Compact Flash, etc.) into the PC memory port or memory input-device module 32. The memory port 32 in which the portable memory device plugs needs to be compatible to the portable device interface. The port 32 could be a USB port, PCMCIA, SD/Mini-SD/Micro-SD, Compact Flash, Memory Stick or any of the different memory interfaces totaling 28 today. The user initiates via the PC 30 or the kiosk 31 the download process of a specific piece of digital content that is available on the local content storage server 12. The content gets wrapped with a DRM wrapper via the local DRM server 14, and gets delivered to the portable memory device with a DRM key. There are be three options to access/play the content:
(1) The portable device, if Microsoft PlayforSure compliant assuming windows media formatted content, has a DRM child-key issued to it which is a license that allows to play the content as desired;
(2) if the portable device has internet connectivity but not Microsoft PlayforSure compliant assuming windows media formatted content, then it must be connected to the internet to validate with the main media server 20 the DRM key and that the content has been purchased by the user. The process validates the license acquired during the content download and purchase, and allows the content to play on the portable device as desired; or
(3) the portable device with no internet connectivity is plugged into a third device with internet connectivity to which the content could be copied depending on the associated DRM rules, and the process in (2) is applied. The user is then able to access additional new content via the same process anytime after the specific time of the day during which the new content is updated.

The local digital content distribution system 10 can be built-in within a kiosk environment, or within a server room that is connected to a PC and touch screen hosting the user interface through which the consumer performs a full purchase cycle of digital content. The digital content distribution system is able to duplicate and apply the same DRM usage and security rules to every piece of downloaded content. With the content available within the digital content distribution system secure environment, it may be securely download to any type of portable memory or device with all DRM rules and keys issued to the device at a speed restricted only by the interface speed between the PC and the memory card or portable device; which reduces the download time for large Gigabyte files from hours to just minutes or even less depending on the file size.

The local content distribution system 10 only needs to be connected to the internet for new content updates, maintenance and test purposes. The local distribution system 10 can be standalone disconnected from the internet, and still allows users to purchase, rent and download content stored in the local high-capacity device storage. The system removes the dependency on the internet availability and data transfer rate for downloads and makes content always available for download regardless of availability of an internet connection, and at speeds dependent on faster technologies such as memory standards interface.

Particular embodiments of the present invention may include a method for digital content distribution that allows the download and purchase of digital content reducing download time significantly compared to a standard DSL internet connection to a speed limited by the portable device memory interface standards.

The method eliminates the dependency of digital content download on the internet connectivity and moving the dependency to the device memory interfaces (USB, SD, Compact Flash, PCMCIA, Memory Stick) data transfer speeds.

The method may further eliminate the dependency on the availability of an internet connection to make content available for download. The digital content distribution system can be standalone, and the user may download and purchase content even in the absence of an internet connection.

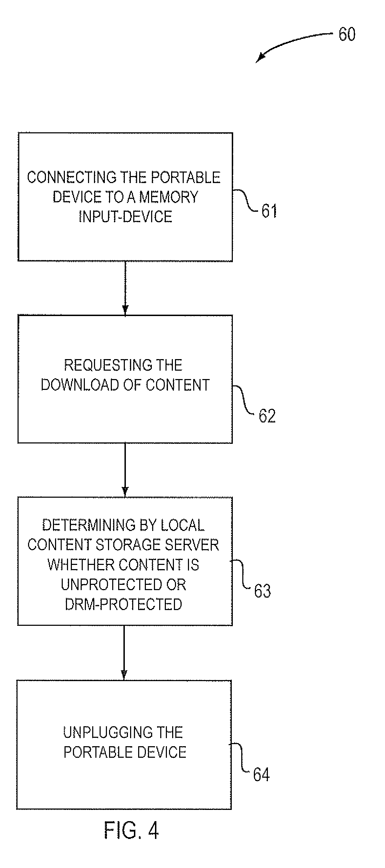

FIG. 4 depicts a method 60 that allows download and purchase of content. The method comprises the following steps: Step 61 connecting the portable device to a memory input-device or a memory port, Step 62 requesting the download of content (movie, music track, music video, album, e-book, games, ringtones/ringtunes, or any other type of digital files) of the portable device or the user, through a user interface, and Step 63 determining by a local content storage server whether the content is an unprotected open file or DRM-protected.

If the content is unprotected, then local content storage server uploads the content directly to the portable device. If the content is DRM-protected, then the local DRM server issues a key and a license wrapper, and the local storage device uploads the DRM wrapped content to the portable device.

The method 60 may also include step 64 of unplugging the portable device. If the portable device is Microsoft PlayforSure compliant assuming windows media formatted content, then the DRM-key is immediately tagged to the portable device and would be ready to play the content. If the portable device is not Microsoft PlayforSure compliant assuming windows media formatted content, and the portable device has internet connectivity, then the portable device validates the license issued by the local DRM server and allows the content to play. If the portable device is not Microsoft PlayforSure compliant assuming windows media formatted content, and the portable device has no internet connectivity, then the content may be copied to a third device that has internet connectivity if the DRM rules allow copies. The third device is then able to validate the license issued by the local DRM server and allows the content to play on the third device, as desired.

The method 60 further includes steps of continuously updating new content from the main media server to the mirror or duplicate the local digital content distribution system from the main HTTP server to the local HTTP server

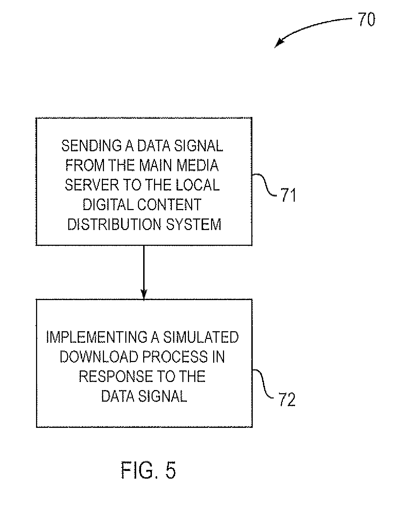

FIG. 5 shows a method 70 that allows remote testing of the local digital content distribution system. The method 70 comprises the following steps: Step 71 sending a data signal from the main media server to the local digital content distribution system, and Step 72 implementing a simulated download process in response to the data signal. The data signal stores a sample piece of content on the local content storage server. The data signal stores the associated DRM license and key on the DRM server. The data signal pushes the sample content back out from the local content storage server, wraps it with the DRM key and license. The data signal sends the content back via the local HTTP server to the main HTTP server. The media server acknowledges the receipt of the sample DRM-protected content and validates it against the original sample content sent.

In an alternative embodiment to the one described above, the main media server 20 may further comprise a content handler module (not shown) for controlling the flow of data from the main media server to the local digital content distribution system 10. It is to be appreciated that the main media server 20 may communicate with a plurality of local digital content distribution systems 10. The content handler module is able to co-ordinate the transmission of the new content.

In another embodiment, as part of updating the local digital content distribution system 10 with new content, it may be necessary to update a library of media files which are available for the user to access. This library may be updated via the content handler module, and may be updated periodically as the new content is received and stored at the local digital content distribution system 10.

The embodiments of the invention described herein are exemplary and numerous modifications, variations and rearrangements can be readily envisioned to achieve substantially equivalent results, all of which are intended to be embraced within the scope of the invention as determined by the appended claims.

## Claims

1. A digital content distribution system comprising:
a main media server (20) comprising a main content storage server (22), a main DRM server (24) and a main HTTP server (26); and
a local distribution system (10) comprising a local content storage server (12), a local DRM server (14) and a local HTTP server (16), wherein the main HTTP server (20) communicates with the local HTTP server (10) and the local distribution system is arranged as a mirror of the main media server (20).

2. The system of claim 1, wherein the DRM server contains a plurality of DRM protection and security rules that are associated with a plurality of DRM-protected digital content files which are stored on the main content storage server (22).

3. The system of claim 1 or claim 2, wherein the local content storage server (12) and the local DRM server (14) mirror the main content storage server (22) and the main DRM server (24) for all of the digital content that has been uploaded onto the local distribution system (10).

4. The system of any preceding claim, wherein the main HTTP server (26) and the local HTTP server (16) are adapted to download digital content from the main media server (20) to the local distribution system (10).

5. The system any preceding claim, wherein the main HTTP server (26) and the local HTTP server (16) are further adapted to communicate with each other such that the main media server (20) may be used to perform maintenance, support and remote testing of the local distribution system (10).

6. The system of any preceding claim, further comprising an external device coupled to the local distribution system (10), the external device adapted to receive one of a portable memory device or a portable device to transfer digital content to.

7. The system of claim 6, wherein the external device is a kiosk arranged to process content purchases , the kiosk comprising a touch screen with a user interface adapted to allow a user to select, download and purchase displayed content.

8. A system implementation that mirrors the main media server configuration that distributes content to online music and movie stores in a local environment, the system comprising:
a main media server having a main content storage server, a main DRM server and a main HTTP server; and a local distribution system that mirrors the main media server having a local content storage server, a local DRM server and a local HTTP server, wherein the local HTTP server is connected through an Internet connection to the main HTTP server in order for the main media server to communicate with the local distribution system.

9. A method for facilitating the download and purchase of content the method comprising:
connecting a portable device to a memory input-device or a memory port;
requesting a download of content of the portable device or the user, through a user interface; and
determining by a local content storage server whether the content is an unprotected open file or DRM-protected.

10. The method of claim 9, further comprising uploading digital content directly to the portable device in response to a determination that the content is unprotected.

11. The method of claim 9 or claim 10, further comprising issuing a key and license wrapper by a local DRM server and combining it with the digital content in response to a determination that the content is DRM-protected, and uploading the DRM wrapped content to the portable device.

12. The method of any of claims 9 to 11, further comprising continuously updating new content from the main media server to the mirror local digital content distribution system from the main HTTP server to the local HTTP server.

13. A method for remote testing of a local digital content distribution system (10), the method comprising:
sending a data signal from the main media server to the local digital content distribution system; and
implementing a simulated download process in response to the data signal, wherein the data signal is adapted to store a sample piece of content on the local content storage server, store associated DRM license and key on the DRM server, push the sample content back out from the local content storage server, and wraps it with the DRM key and license.

14. The method of claim 13, wherein the data signal sends the content back via the local HTTP server to the main HTTP server.

15. The method of claim 13 or claim 14, further comprising acknowledging receipt of the sample DRM-protected content by the main media server and validating it against the original sample content sent.
